# EUROPÄISCHE PATENTANMELDUNG

(11) **EP 1 020 963 A2**
(43) Veröffentlichungstag der Anmeldung: **19.07.2000**
(21) Anmeldenummer: 99121037.8
(22) Anmeldetag: 21.10.1999
(51) Int. Cl.: H01R 13/66

(54) **Überspannungsableitermagazin für die Telekommunikations- und Datentechnik**

(30) Priorität: 12.01.1999 DE 19900759
(71) Anmelder: KRONE GmbH, 14167 Berlin (DE)
(72) Erfinder: Bippus, Hans-Dieter, Gwandalan NSW 2259 (AU); Nicholls, Bryce Lindsay, NSW 2260 Avoca Beach (AU)

(57) **Zusammenfassung**

Die Erfindung bezieht sich auf ein Überspannungsableitermagazin für die Telekommunikations- und Datentechnik, aus Ober- und Unterteil aus Kunststoff und aus paarweise angeordneten metallischen Kontaktelementen, die mittels Federarmen in Kammern des Oberteils zur Kontaktierung von Überspannungsableitern eingreifen und als Kontaktmesser aus dem Unterteil herausragen.Um das Überspannungsableitermagazin auch für Anschlußleisten für hohe Übertragungsraten verwenden zu können, sieht die Erfindung vor, daß die Kontaktmesser (11) zum Auftrennen von in das Innere der Anschlußleiste (1) gerichteten Kontaktfingern (6) von Schneidklemm-Kontaktelementen (4) etwa doppelt so lang wie die Federarme (19) und am freien Ende durch Umbiegen auf mehr als die doppelte Materialstärke (d) verdickt ausgebildet sind.

## Beschreibung

Die Erfindung bezieht sich auf ein Überspannungsableitermagazin für die Telekommunikations- und Datentechnik, aus einem Ober- und einem Unterteil aus Kunststoff und aus paarweise angeordneten metallischen Kontaktelementen, die mittels Federarmen in Kammern des Oberteils zur Kontaktierung von Überspannungsableitern eingreifen und als Kontaktmesser aus dem Unterteil herausragen.

Ein Überspannungsableitermagazin der gattungsgemäßen Art ist aus der DE 3014796 C3 vorbekannt. Bei diesem sind die aus dem Unterteil herausragenden Kontaktmesser zum Eingreifen in Kontaktfedern einer Anschlußleiste ausgebildet, deren Bauart aus der DE 2725551 C2 vorbekannt ist.Dabei bilden jeweils zwei Schneidklemm-Kontaktelemente zusammen mit einer Kontaktfeder ein einzelnes Bauteil, wobei die Kontaktfeder sich relativ dicht an der Oberseite der Anschlußleiste befindet, so daß die Kontaktmesser in diese eingreifen können.

Es sind ferner aus der DE 4325952 C2 Anschlußleisten für hohe Übertragungsraten in der Telekommunikations- und Datentechnik vorbekannt, bei denen zwischen den Schneidklemm-Kontaktelementen in das Innere der Anschlußleiste gerichtete Kontaktfinger vorhanden sind, die von einer leiterplattenartigen Steckerzunge eines Steckers auftrennbar sind. Ein Überspannungsschutz für eine derartige Anschlußleiste für hohe Übertragungsraten kann durch Einstecken des aus der DE 3014796 C3 vorbekannten Überspannungsableitermagazines nicht erfolgen, da dessen Kontaktmesser die Kontaktfinger einer solchen Anschlußleiste für hohe Übertragungsraten nicht auftrennen können.

Der Erfindung liegt von daher die Aufgabe zugrunde, das Überspannungsableitermagazin der gattungsgemäßen Art dahingehend weiterzubilden, daß dieses auch zum Überspannungsschutz von Anschlußleisten für hohe Übertragungsraten verwendet werden kann.

Zur Lösung dieser Aufgabe sieht die Erfindung vor, daß die Kontaktmesser zum Auftrennen von in das Innere einer Anschlußleiste gerichteten Kontaktfingern von Schneidklemm-Kontaktelementen etwa doppelt so lang wie die Federarme und am freien Ende durch Umbiegen auf mehr als die doppelte Materialstärke verdickt ausgebildet sind. Durch diese wesentliche Verlängerung der Kontaktmesser und durch die erhebliche Verdickung der Kontaktmesser erhalten diese die Funktion eines leiterplattenartigen Steckers, der zwischen die in das Innere der Anschlußleiste gerichteten Kontaktfinger eingreifen und diese kontaktierend auftrennen kann, so daß ein Überspannungsschutz für die Anschlußleiste für hohe Übertragungsraten gewährleistet ist. Wesentlich hierbei ist die Kombination aus Verlängerung und Verdickung der Kontaktmesser, da nur hierbei sowohl eine Kontaktierung als auch eine Auftrennung der in das Innere der Anschlußleiste gerichteten Kontaktfinger der Schneidklemm-Kontaktelemente gewährleistet wird.

Zur Stabilisierung und Lagesicherung weisen die Kontaktmesser etwa in der Längsmitte eine aus dem Material freigeschnittene Auswölbung auf.

Weitere vorteilhafte Ausgestaltungen der Erfindung ergeben sich aus den weiteren Unteransprüchen.

Die Erfindung ist nachfolgend anhand eines in den Zeichnungen dargestellten Ausführungsbeispieles eines Überspannungsableitermagazines für die Telekommunikations- und Datentechnik näher erläutert. Es zeigt:
- Fig. 1: einen vertikalen Querschnitt durch das in eine Anschlußleiste eingesteckte Überspannungsableitermagazin,
- Fig. 2: die Stirnansicht des Überspannungsableitermagazines,
- Fig. 3: eine perspektivische Ansicht des Überspannungsableitermagazines,
- Fig. 4: eine Seitenansicht des Unterteiles des Überspannungsableitermagazines mit Kontaktelementen,
- Fig. 5: eine vergrößerte Draufsicht auf das Unter teil gemäß Fig. 4 ohne Kontaktelemente,
- Fig. 6: einen Schnitt nach der Linie VI-VI in Fig.5 mit Kontaktelementen,
- Fig. 7: einen Querschnitt durch das Unterteil mit Kontaktelementen und
- Fig. 8: ein Kontaktelement in perspektivischer Seitenansicht.

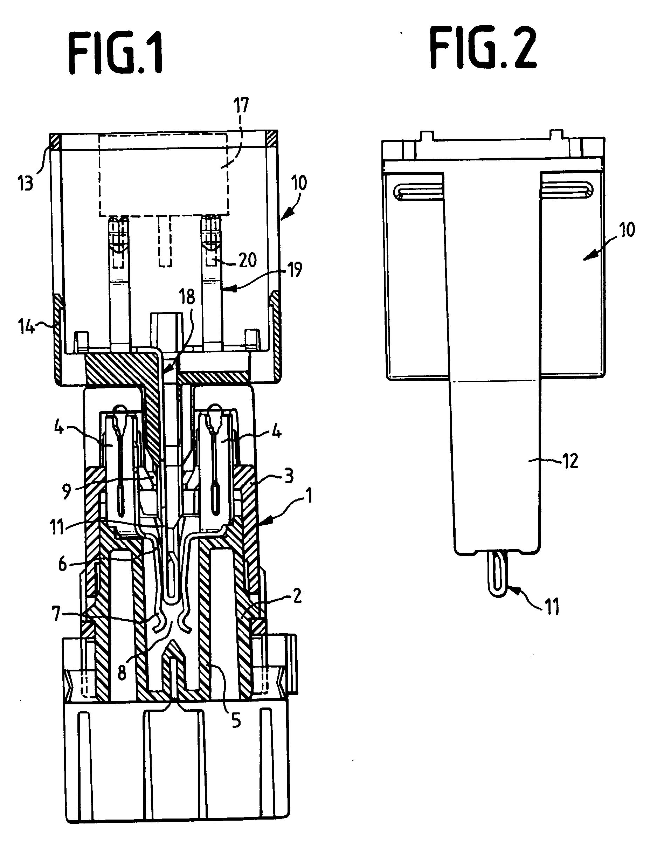

Die Fig. 1 zeigt im unteren Teil einen vertikalen Querschnitt durch eine Anschlußleiste 1 für hohe Übertragungsraten in der Telekommunikations- und Datentechnik gemäß der DE 4325952 C2. Die Anschlußleiste 1 besteht aus einem Gehäuseunterteil 2 und einem Gehäuseoberteil 3, jeweils aus Kunststoff, in welche zwei Reihen von kurzen Schneidklemm-Kontaktelementen 4 zum Anschluß von Kabeladern eingesetzt sind, wobei in nicht näher dargestellter Weise der Abstand zwischen zwei benachbarten Paaren von Schneidklemm-Kontaktelementen 4 größer ist als der Abstand zwischen zwei benachbarten Schneidklemm-Kontaktelementen eines Paares. Die Schneidklemm-Kontaktelemente 4 stützen sich auf Stützwände 5 im Gehäuseunterteil 2 und sind mit schräg abgewinkelten, in das Innere der Anschlußleiste 1 gerichteten Kontaktfingern 6 und an diese anschließenden Federkontakten 7 verlängert, die zwischen sich eine Trennstelle 8 bilden. Die Anschlußleiste 1 weist zwischen den beiden Reihen von Schneidklemm-Kontaktelementen 4 eine Reihe von Einstecköffnungen 9 für Kontaktmesser 11 eines Überspannungsableitermagazines 10 auf, die zum Auftrennen der Kontaktverbindung zwischen den Federkontakten 7 dienen.

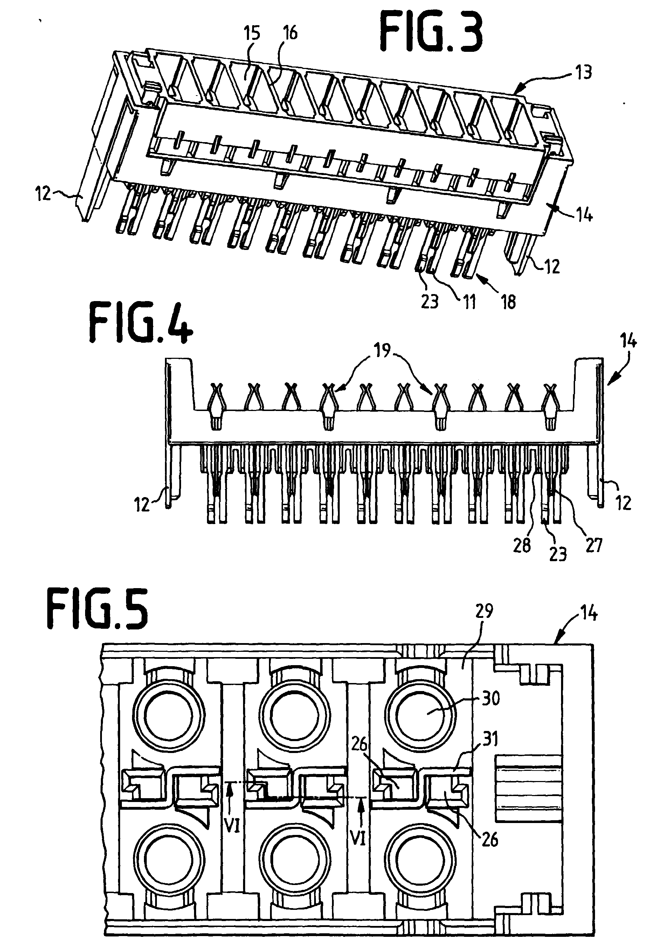

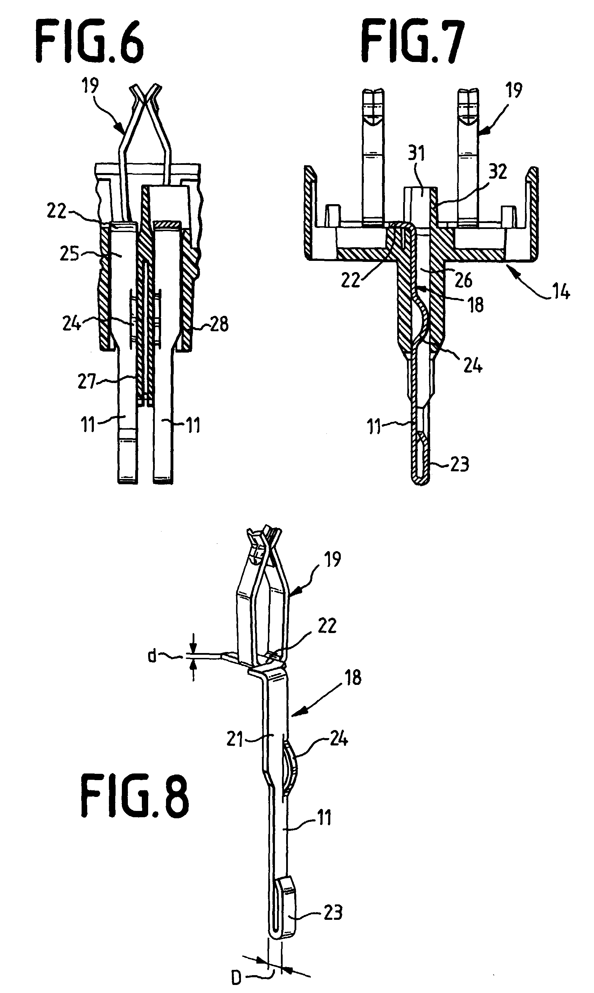

Das in den Figuren 2 bis 7 näher dargestellte Überspannungsableitermagazin 10 trägt an beiden Stirnseiten laschenartige Verlängerungen 12 aus Kunststoff, die in nicht näher dargestellter Weise der Verbindung mit dem Gehäuseoberteil 3 der Anschlußleiste 1 dienen und die von den freien Enden der Kontaktmesser 11 überragt werden. Das Überspannungsableitermagazin 10 für die Telekommunikations- und Datentechnik besteht aus einem Oberteil 13 und einem Unterteil 14, jeweils aus Kunststoff, von denen das Oberteil 13 im Unterteil 14 durch Rastverbindungen verrastet ist. Im Oberteil 13 sind zehn durch Querwände 16 unterteilte Kammern 15 zum Einsetzen von Überspannungsableitern 17 (Fig.1) ausgebildet. Jeder Kammer 15 ist ein Paar metallischer Kontaktelemente 18 (Fig.8) zugeordnet, die aus in die Kammern 15 ragenden Federarmen 19 zur Kontaktierung der Anschlußbeine 20 der Überspannungsableiter 17 und aus einem aus dem Unterteil 14 herausragenden Kontaktmesser 11 bestehen. Die Federarme 19 sind jeweils paarweise an einem Steg 22 angesetzt und am freien Ende V-förmig abgewinkelt und gegeneinander gerichtet. Vom Steg 22 geht unter einer Rundung und unter etwa 90° das Kontaktmesser 11 aus, das etwa doppelt so lang ist wie die Federarme 19 und am freien Ende durch Umbiegen einer Endlasche 23 auf eine Dicke D von mehr als der doppelten Materialstärke d des Kontaktmessers 21 verdickt ausgebildet ist. Jedes metallische Kontaktelement 18 ist mit seinen paarweise angeordneten Federarmen 19, seinem Kontaktmesser 11 und seiner umgebogenen Endlasche 23 einstückig ausgebildet. Etwa in der Längsmitte des Kontaktmessers 21 ist unterhalb einer Schulter 21 eine aus dem Material des Kontaktmessers 11 freigeschnittene, über die flächige Schulter 21 herausgewölbte, bogenförmige Auswölbung 24 vorgesehen, die zur Aufnahme des Spiels des in das Unterteil 14 eingesetzten Kontaktmessers 11 dient, da das Kontaktmesser 11 wegen der verdickten Endlasche 23 eine im Querschnitt größere Durchtrittsöffnung 26 durch den Boden 29 des Unterteiles 14 erfordert, wie es später noch erläutert werden wird.

Wie es die Fig. 4 zeigt, ragen die paarweise angeordneten Federarme 19 in den freien Raum des Unterteiles 14 hinein, in welchen das Oberteil 13 eingesetzt wird, wobei die Federarme 19 jeweils paarweise in die Kammern 15 des Oberteils 13 eingreifen. Die länger ausgebildeten Kontaktmesser 11 mit der verdickten Endlasche 23 ragen aus dem Unterteil 14 parallel zu den seitlichen Laschen 12 heraus und sind jeweils um 180° verdreht in den Boden 29 des Unterteils 14 eingesteckt, so daß die verdickten Endlaschen 23 des Kontaktmessers 11 abwechselnd zu den beiden Längsseiten des Unterteiles 14 gerichtet sind. Wie es Fig. 7 zeigt, sind die metallischen Kontaktelemente 18 mit ihren Stegen 22 parallel zum Boden des Unterteiles 14 in dieses eingesteckt, wobei die Kontaktmesser 11 die Öffnungen 26 im Boden des Unterteils 14 durchdringen, deren Querschnitt L-förmig (Fig. 5) ausgebildet und an die verdickte Endlasche 23 angepaßt ist.

Auf der Unterseite des Unterteiles 14 sind zwischen den seitlich begrenzenden Laschen 12 mittlere Führungsstege 27 aus Kunststoff vorhanden, die jeweils ein Paar von Kontaktmessern 11 führen. Zwischen jeweils zwei Paaren von Kontaktmessern 11 sind Mittelstege 28 aus Kunststoff vorhanden, welche die Kontaktmesser 11 zusätzlich führen. Die freigeschnittene Auswölbung 24 eines jeden Kontaktmessers 11 kommt dabei in einem den Führungsstegen 27 und den Mittelstegen 28 gebildeten Führungskanal 33 derart zur Anlage, daß das Kontaktmesser 11 trotz der im Querschnitt größeren Öffnung 26 fest im Unterteil 14 gelagert ist. Der Boden 29 des Unterteils 14 weist je Paar von Kontaktmessern 11 zwei große Öffnugen 30, dazwischen eine Z-förmige Wand 31 und beidseits der Schenkel 23 der Wand 31 die im Querschnitt L-förmigen Öffnungen 26 zum Durchtritt der Kontaktmesser 11 mit ihren verdickten Endlaschen 23 auf. Zur Lagesicherung und zur Aufnahme eines Spiels des Kontaktmessers 11 in dem sich an die Öffnung 26 anschließenden Führungskanal 33 sind die Auswölbungen 24 vorgesehen.

### BEZUGSZEICHENLISTE

- 1: Anschlußleiste
- 2: Gehäuseunterteil
- 3: Gehäuseoberteil
- 4: Schneidklemm-Kontaktelement
- 5: Stützwand
- 6: Kontaktfinger
- 7: Federkontakt
- 8: Trennstelle
- 9: Einstecköffnung
- 10: Überspannungsableitermagazin
- 11: Kontaktmesser
- 12: Verlängerung
- 13: Oberteil
- 14: Unterteil
- 15: Kammer
- 16: Querwand
- 17: Überspannungsableiter
- 18: Kontaktelement
- 19: Federarm
- 20: Anschlußbein
- 21: Schulter
- 22: Steg
- 23: Endlasche
- 24: Auswölbung
- 25: Schulter
- 26: Durchtrittsöffnung
- 27: Führungssteg
- 28: Mittelsteg
- 29: Boden
- 30: Öffnung
- 31: Wand
- 32: Schenkel
- 33: Führungskanal

## Patentansprüche

1. Überspannungsableitermagazin für die Telekommunikations- und Datentechnik, aus Ober- und Unterteil aus Kunststoff und aus paarweise angeordneten metallischen Kontaktelementen, die mittels Federarmen in Kammern des Oberteils zur Kontaktierung von Überspannungsableitern eingreifen und als Kontaktmesser aus dem Unterteil herausragen,
**dadurch gekennzeichnet,**
daß die Kontaktmesser (11) zum Auftrennen von in das Innere einer Anschlußleiste (1) gerichteten Kontaktfingern (6) von Schneidklemm-Kontaktelementen (4) etwa doppelt so lang wie die Federarme (19) und am freien Ende durch Umbiegen auf mehr als die doppelte Materialstärke (d) verdickt ausgebildet sind.

2. Überspannungsableitermagazin nach Anspruch 1, dadurch gekennzeichnet, daß die Kontaktmesser (11) etwa in der Längsmitte eine aus dem Material freigeschnittene Auswölbung (24) aufweisen.

3. Überspannungsableitermagazin nach Anspruch 2, dadurch gekennzeichnet, daß im Boden (29) des Unterteils (14) eine im Querschnitt L-förmige Öffnung (26) zum Durchtritt des Kontaktmessers (11) mit seinem verdickten freien Ende (23) ausgebildet und das Kontaktmesser (11) in einem an die Öffnung (26) anschließenden Führungskanal (33) mittels der Auswölbung (24) geführt ist.

4. Überspannungsableitermagazin nach einem der Ansprüche 1 bis 3, dadurch gekennzeichnet, daß die Anschlußleiste (1) für hohe Übertragungsraten mit Schneidklemm-Kontaktelementen (4) bestückt ist, wobei der Abstand zwischen zwei benachbarten Paaren von Schneidklemm-Kontaktelementen größer ist als der Abstand zwischen zwei benachbarten Schneidklemm-Kontaktelementen eines Paares, und ferner mit einer mittleren Reihe von Einstecköffnungen (9) für die Kontaktmesser (11) versehen ist.
